**Europäisches Patentamt**

**European Patent Office**

**Office européen des brevets**

(19)

(11) Veröffentlichungsnummer : **0 365 050 B1**

(12)

# EUROPÄISCHE PATENTSCHRIFT

(45) Veröffentlichungstag der Patentschrift :
**29.04.92 Patentblatt 92/18**

(51) Int. Cl.⁵ : **A01B 49/02**

(21) Anmeldenummer : **89122300.0**

(22) Anmeldetag : **17.07.86**

(54) **Kombinierte Gerätekombination.**

(30) Priorität : **21.09.85 DE 3533820**

(43) Veröffentlichungstag der Anmeldung :
**25.04.90 Patentblatt 90/17**

(45) Bekanntmachung des Hinweises auf die
Patenterteilung :
**29.04.92 Patentblatt 92/18**

(84) Benannte Vertragsstaaten :
**DE FR GB NL**

(56) Entgegenhaltungen :
**EP-A- 0 033 950**
**EP-A- 0 091 878**
**US-A- 3 339 643**

(60) Veröffentlichungsnummer der früheren
Anmeldung nach Art. 76 EPü : **0 216 050**

(73) Patentinhaber : **Amazonen-Werke H. Dreyer
GmbH & Co. KG
Am Amazonenwerk 9-13
W-4507 Hasbergen-Gaste (DE)**

(72) Erfinder : **Gattermann, Bernd
Eichenwall 3
W-2872 Hude i.O. (DE)**
Erfinder : **Gehrke, Rudolf
Lärchenweg 6
W-2990 Papenburg 2 (DE)**

**Beschreibung**

Die Erfindung betrifft eine kombinierte Gerätekombination gemäß des Oberbegriffes des Patentanspruches 1.

Eine derartige Gerätekombination ist durch die US-PS 33 39 643 bekannt. Bei dieser Gerätekombination besteht die Nachlaufwalze aus auf einem Tragrohr direkt nebeneinander angeordneten Reifen. Diese Reifen sind ohne Zwischenraum zueinander angeordnet. Hierdurch wird die Bodenoberfläche vollkommen glatt gewalzt. Dieses ist aber vor allem auf schweren Böden sehr nachteilig. Schwere Böden neigen derartig glatt gewalzt sehr schnell zum Verschlämmen. Die Auflauf- und Keimbedingungen für in ein derart glatt gewalztes Saatbett abgelegten Saatgut sind sehr schlecht.

Der Erfindung liegt nun die Aufgabe zugrunde, die eingangs beschriebene Gerätekombination für den Einsatz insbesondere auf schweren Böden zu verbessern, so daß auf sehr einfache Weise ein optimales Saatbett erreicht wird.

Diese Aufgabe wird erfindungsgemäß durch die kennzeichnenden Maßnahmen des Anspruches 1 gelöst. Durch diese hinter der Walze angeordnete Striegelzinken wird der Wall zwischen den einzelnen Reifen eingeebnet, indem die Erde dieses Walles jeweils zur Seite auf die von den Reifen verfestigen Streifen geworfen wird, so daß sich oberhalb des von den Reifen verfestigten Bereiches der gesamten Arbeitsbreite lockerer Boden befindet, so daß ein optimales Saatbett und somit optimale Keim- und Auflaufbedingungen für das in diesem Saatbett abgelegte Saatgut geschaffen wird. Durch die Reifen wird der Boden, auch auf schwierigsten Bodenverhältnissen verdichtet, während anschließend von den Zinken durch die Einebnung des Erdwalles und das zur Seitewerfen der Erde des Erdwalles aus dem Zwischenraum zwischen den Reifen auf die Laufradspuren der Reifen eine lockere und ebene obere Bodenschicht erzeugt wird.

In einer Ausführungsform ist vorgesehen, daß die Striegelzinken an einem Querbalken angeordnet sind, und daß der Querbalken in seiner Höhe verstellbar ist. Hierdurch kann die Wirkungsweise der Striegelzinken in einfacher Weise an die jeweils vorherschenden Bodenverhältnisse angepaßt werden.

In einer anderen Ausführungsform ist erfindungsgemäß vorgesehen, daß jeder Striegelzinken separat höhenverstellbar an der Halterung des Reifens bzw. an den Tragrahmen befestigt ist. Hierdurch werden die gleichen Vorteile wie durch die Befestigung der Striegelzinken an dem Querbalken erzielt.

Auf ganz schwierigen Bodenverhältnissen kann es erforderlich sein, daß zusätzlich zu den Striegelzinken zwischen diesen jeweils zumindest ein weiterer Striegel in dem Bereich hinter dem jeweiligen Reifen angeordnet ist. Hierdurch lockert dieser Striegelzinken dann die aller oberste verfestigte Bodenschicht, so daß sich in dem obersten Bereich oberhalb des rückverfestigten Bodens eine lockere krümlige Schicht befindet, so daß ein optimales Saatbett erzielt wird.

Weitere Einzelheiten der Erfindung sind der Beispiels beschreibung und den Zeichnungen zu entnehmen. Hierbei zeigen

Fig. 1 die erfindungsgemäße Bodenwalze in der Ansicht von hinten,
Fig. 2 eine erfindungsgemäße Gerätekombination mit der Bodenwalze nach Fig. 1 in der Seitenansicht,
Fig. 3 eine weitere erfindungsgemäße Gerätekombination in der Seitenansicht,
Fig. 4 eine andere Bodenwalze in der Ansicht von hinten und
Fig. 5 eine Gerätekombination mit der Bodenwalze nach Fig. 4 in der Seitenansicht.

Die als Nachlaufwalze 1 ausgebildete Bodenwalze weist den Tragrahmen 2 und die nebeneinander in einer quer sich zur Fahrtrichtung erstreckenden Reihe nebeneinander angeordneten luftbereiften Reifen 3 auf. Der Tragrahmen 2 ist oberhalb der Reifen 3 angeordnet. Die Reifen 3 sind Niederdruckreifen, die sich vorzugsweise durch starke Walkarbeit selbst reinigen. Der Luftdruck in den Niederdruckreifen beträgt 0,3 bis 0,5 bar. Die Reifen 3 weisen das pfeilförmige Prolfil 4 auf. Hierbei sind alle Reifen 3 der Bodenwalze 1 derart montiert, daß die Spitzen 5 des pfeilförmigen Profils 4 der Drehrichtung 6 der Reifen entgegengesetzt gerichtet sind. Die Bodenwalze 1 ist über die Tragarme 7 hinter den Bodenbearbeitungswerkzeugen 8 der als Kreiselegge 9 ausgebildeten Bodenbearbeitungsmaschine angeordnet. Die Bodenwalze 1 und die Kreiselegge 9 bilden die kombinierte Gerätekombination. Diese Gerätekombination ist über die Dreipunktkupplungselemente, die sich auf der Vorderseite der Kreiselegge 9 befinden, an den Dreipunktkraftheber eines nicht dargestellten Schleppers anzuschließen.

Die Bodenwalze 1 bestimmt die Eindringtiefe der Bodenbearbeitungswerkzeuge 8 der Kreiselegge 9 in den Boden, da sich die Kreiselegge 9 über die einstellbaren Anschläge 11 über die Tragarme 7 auf der Bodenwalze 1 abstützt.

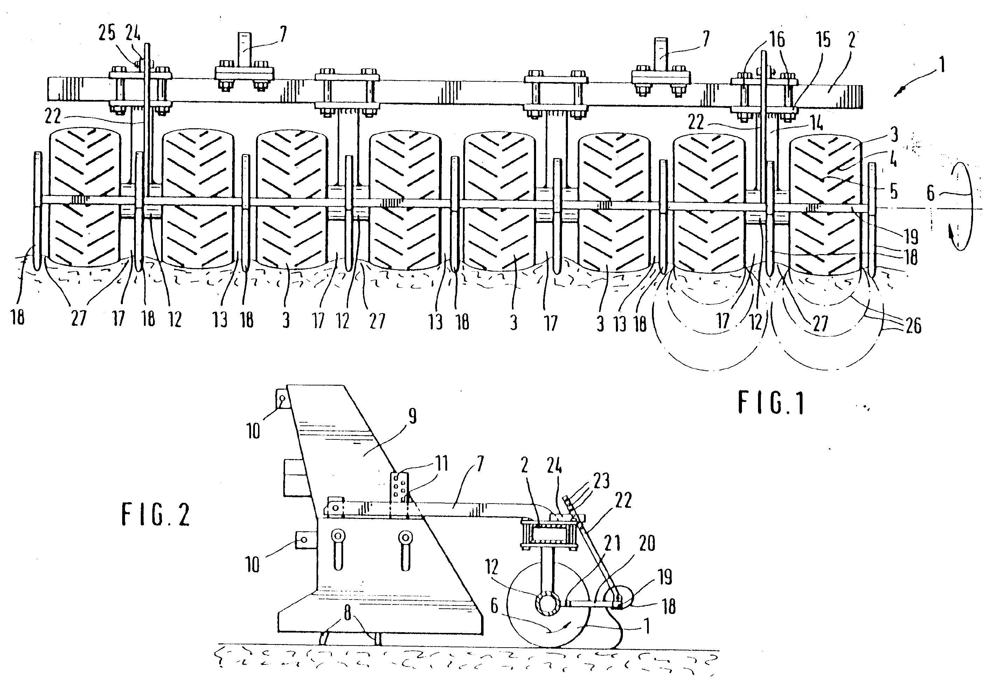

Die Bodenwalze 1 besteht aus den jeweils mit einem Abstand nebeneinander angeordneten luftbereiften Reifen 3. Bei der Bodenwalze gemäß der Fig. 1 sind jeweils zwei Reifen nebeneinander auf dem Wellenabschnitt 12 angeordnet. Die Reifen 3 sind jeweils auf den Wellenabschnitten 12 drehbar gelagert. Somit ist also die aus den Wellenabschnitten 12 bestehende Welle, auf denen die Reifen gelagert sind, nach jedem zweiten

2

Reifen 3 unterbrochen. Somit ergibt sich also nach jedem zweiten Reifen der freie Zwischenraum 13 jeweils zwei Reifen 3. Die Wellenabschnitte 12, auf denen die Reifen 3 drehbar gelagert sind, sind feststehend angeordnet. An den Wellenabschnitten 12 ist jeweils die Halterung 14 befestigt. Diese Halterung 14 weist auf ihrer Oberseite jeweils die Flanschplatte 15 auf, über welche die Halterung 14 und somit der Wellenabschnitt 12 mit den beiden Reifen 3 mit den Schrauben 16 an den Tragrahmen 2 seitlich ein- und verstellbar angeordnet sind. Der Zwischenraum 13 bzw. 17 zwischen den Reifen 3 beträgt jeweils zumindest 4 cm. Über die Flanschplatten 15 und die Schrauben 16 ist der Wellenabschnitt 12 mit den Reifen 3 lös- und abnehmbar an dem Tragrahmen 2 befestigt.

Hinter der Bodenwalze 1 sind in dem Bereich der Zwischenräume 13 und 17 jeweils die Striegelzinken 18 angeordnet. Des weiteren ist jeweils ein Striegelzinken 18 hinter der Bodenwalze 1 in dem Bereich seitlich neben dem äußeren Bereich des äußeren Reifens 3 angeordnet. Die Striegelzinken 18 sind an dem Querbalken 19 befestigt, der mittels der Streben 20 an den Wellenabschnitten 12 mittels der Gelenke 21 angelenkt ist. Des weiteren sind an den Querbalken 19 noch die Einstellstreben 22 angeordnet.

Diese Einstellstreben 22 weisen auf ihrer Oberseite mehrere übereinander angeordnete Löcher 23 auf. Des weiteren ist an dem Tragrahmen 2 die Einstellplatte 24 angeordnet, die einen Bolzen 25 aufweist, so daß die jeweilige Einstellstrebe 22 über die Löcher 23 auf diesen Bolzen 25 eingehängt werden kann. Somit kann der Querbalken 19 derart in der Höhe verstellt werden, so daß die Striegelzinken 18 zentral in der Höhe bzw. in ihrer Eingriffstiefe in den Boden eingestellt werden können.

Im folgenden soll die Funktion der erfindungsgemäßen Gerätekombination, insbesondere die Funktionsweise der Bodenwalze 1 näher erläutert werden:

Durch die Gerätekombination, die aus der Kreiselegge 9 und der aus den Reifen 3 zusammengesetzten Bodenwalze 1 besteht, soll in einem Arbeitsgang der Boden durch die Kreiselegge 9 gekrümelt und durch die Bodenwalze 1 rückverfestigt werden, so daß ein Saatbett mit einer optimalen Krümelstruktur, entsteht. Die Bodenbearbeitungswerkzeuge 8 der Kreiselegge 9 zerschlagen die groben Kluten und erzeugen eine Krümelstruktur wenn die Kreiselegge 9 soweit abgesenkt wird, daß die Bodenbearbeitungswerkzeuge 8 in den Boden eindringen. Durch die Reifen 3 der Bodenwalze 1 wird der Boden, der von den Bodenbearbeitungswerkzeugen 8 der Kreiselegge 9 gelockert worden ist, wieder rückverfestigt, so daß unterhalb der einzelnen Reifen die nur unter den beiden äußeren rechten Reifen 3 in der Fig. 1 dargestellten Druckzwiebeln 26 erzeugt werden. Direkt in der Spur der Reifen 3 wird der Boden in der obersten Bodenschicht stärker angedrückt als in den Zwischenräumen 13 und 17 als zwischen den Reifen 3, so daß in den Zwischenräumen 13 und 17 ein Erdwall 27 unverfestigter bzw. lockerer krümliger Boden etwas erhöht gegenüber der Laufradspur der Reifen 3 zurückbleibt. Diese Erde des Erdwalles 27 wird durch die Striegelzinken 18 seitlich verteilt bzw. zur Seite in die Laufradspuren der Reifen 3 geworfen, so daß die Laufradspur der Reifen 3 mit einer krümeligen Bodenschicht bedeckt wird. Hierdurch entsteht ein optimales Saatbett.

Durch die großen Zwischenräume 13 bzw. 17 zwischen den nebeneinander angeordneten Reifen 3 können sich keine Kluten zwischen den Reifen 3 einklemmen bzw. kann sich keine Erdschicht bzw. keine Erdscheibe in diesen Zwischenräumen 13 und 17 aufbauen, die die Reifen 3 von ihren Felgen drücken würden. Des weiteren sind Reifen so mit dem pfeilförmigen Profil 4 so montiert, daß die Spitzen 5 des pfeilförmigen Profils der Reifen 3er Drehrichtung 6 der Reifen 3 entgegengerichtet sind. Hierdurch werden die Kluten nicht in Richtung der Zwischenräume 13 und 17 zwischen die Reifen gefördert, sondern vielmehr zur Mitte der Reifen 3 gedrückt, so daß sie dann in der Mitte der Laufradspur von den Reifen 3 abfallen. Somit können also die von den Reifen 3 mitgenommenen Kluten nicht in die Zwischenräume 13 bzw. 17 zwischen die Reifen 3 gelangen. Des weiteren wird ein Aufbau eines Erdringes in dem Zwischenraum 13 zwischen den Reifen 3 schon dadurch vermieden, daß dieser Zwischenraum 13 von keinem Bauteil gestört ist bzw. nicht von einer Welle durchsetzt wird. Der Aufbau einer Erdscheibe in dem Zwischenraum 17 zwischen den Reifen 3 wird dadurch verhindert, daß der Wellenabschnitt 12 feststeht und somit sich nicht mitdreht. Somit kann sich auf den Wellenabschnitt 12 kein umlaufender Erdring aufbauen.

Von entscheidender Bedeutung der verstopfungsfreien Arbeit der Bodenwalze 1 ist es also, daß in dem Zwischenraum 13 keine umlaufende Welle bzw. auch keine feststehende Welle sich befindet, da die Kluten in diesen Zwischenraum 13 frei durchfallen können. Des weiteren ist von entscheidender Bedeutung, daß in dem Zwischenraum 17 zwischen den Reifen 3 ebenfalls keine umlaufende Welle sich befindet, so daß sich keine umlaufende Erdscheibe zwischen den Reifen 3 aufbauen kann, der die Reifen von ihren Felgen drücken bzw. den Zwischenraum 17 verstopfen würde. Evtl. von den Reifen 3 in den Zwischenraum 17 eingeklemmte Kluten werden von der Halterung 14 aus dem Zwischenraum zwischen den Reifen 17 entfernt bzw. von der Halterung 14 zerkrümelt.

Die von den Laufrädern 3 durch das Andrücken des Bodens verfestigte Bodenschicht gebildet einen verdichteten Horizont, der gleichzeitig Saatablagehorizont ist, so daß das Saatgut, wie von den Ackerbauern gefordert, auf einer etwas angedrückten Erdschicht abgelegt wird, so daß das Saatgut Anschluß an die wasserführende Schicht des Bodens erhält. Abgedeckt wird das auf diesem verdichteten Horizont abgelegte Saatgut durch eine Schicht lockeren Boden, der im wesentlichen durch das Verteilen der Erde des Erdwalles 27 zwischen den Reifen 3 durch die Striegelzinken 18 erzeugt worden ist.

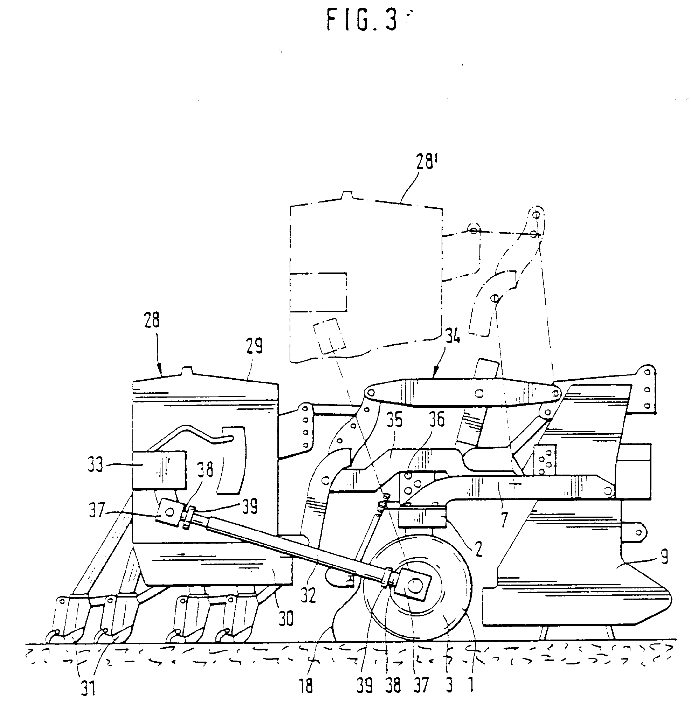

Die Gerätekombination gemäß Fig. 3 unterscheidet sich von der Gerätekombination gemäß Fig. 2 dadurch, daß sie zusätzlich zu dem Kreiselgrubber 9 und der Bodenwalze 1 noch eine hinter der Bodenwalze 1 angeordnete Sämaschine 28 aufweist. Die Sämaschine 28 weist den Vorratsbehälter 29 und den laufradlosen Rahmen 30 auf. An dem Rahmen 30 sind die Säschare 31 in aufrechter Ebene schwenkbar angeordnet. Weiterhin weist die Sämaschine 28 die nicht dargestellten Dosierorgane, die vor dem unteren Bereich des Vorratsbehälters 29 angeordnet sind, auf. Die Dosierorgane werden von den Reifen 3 der Bodenwalze 1 über das Schiebeprofilrohr 32 und über das Regelgetriebe 33 angetrieben.

Die Sämaschine 28 ist mittels des hydraulischen Hubrahmens 34 hinter der Nachlaufwalze angeordnet. Die Unterlenker 35 stützen sich in Sästellung der Sämaschine 28 auf den höhenverstellbaren Anschlägen 36, die auf dem Tragrahmen 2 der Bodenwalze 1 angeordnet sind, ab. Über den hydraulischen Hubrahmen 34 kann die Sämaschine in die mit strichpunktierten Linien angedeutete Stellung 28' zum Wenden am Feldende angehoben werden.

Zum Antrieb des Regelgetriebes 33 über das Schiebeprofilrohr 32 ist jeweils ein Winkelgetriebe 37, wovon je eines auf der Wellenachse der Reifen 3 und der Antriebswelle des Regelgetriebes 33 schwenkbar angeordnet ist. Weiterhin ist jeweils zwischen dem Schiebeprofilrohr 32 und den Wellen 38 jeweils die elastische Kupplung 39 angeordnet, die kleine Fluchtfehler der Wellen 38 der Winkelgetriebe 37 ausgleicht.

Durch die Gerätekombination gemäß Fig. 3 kann also in einem Arbeitsgang der Boden durch die Kreiselegge 9 gelockert und durch die Reifen 3 der Bodenwalze angedrückt werden, so daß ein optimales Saatbett entsteht und gleichzeitig über die Säschare 31 der Sämaschine 28 das Saatgut im Boden abgelegt werden.

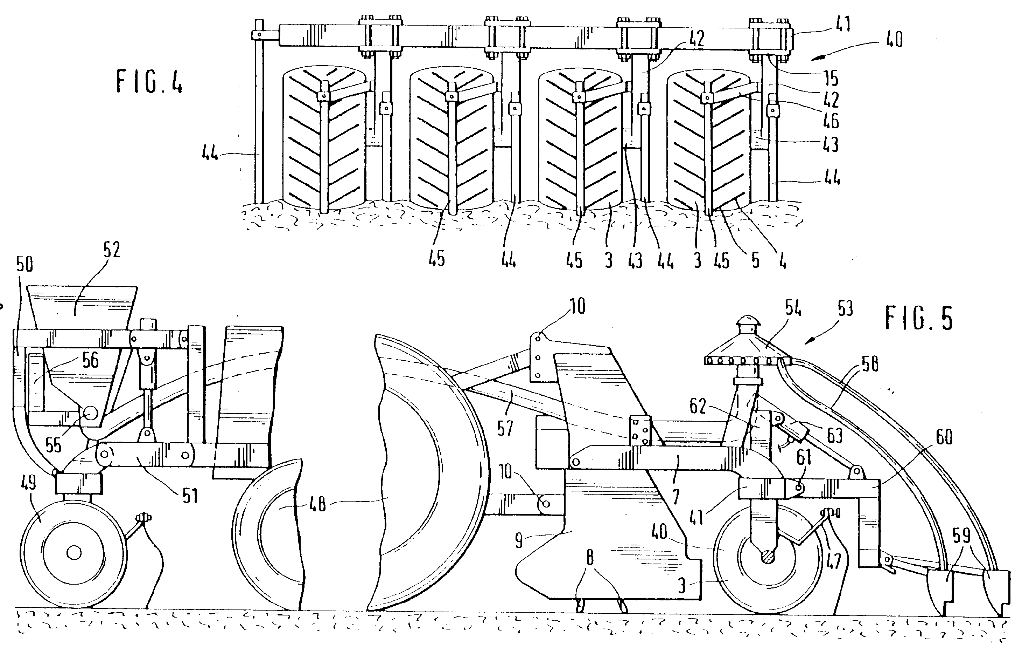

Die Bodenwalze 40 gemäß Fig. 4, die Bestandteil der Gerätekombination gemäß der Fig. 5 ist, weist einen Tragrahmen 41 und die als Niederdruckreifen ausgebildeten luftbereiften Räder 3 auf. Der Tragrahmen 2 ist oberhalb der Reifen 3 angeordnet. Die Reifen 3 weisen das pfeilförmige Profil 4 auf. Hierbei sind alle Reifen 3 der Bodenwalze 40 derart montiert, daß die Spitzen 5 des pfeilförmigen Profils 4 der Drehrichtung der Reifen 3 entgegengesetzt gerichtet sind. Die Bodenwalze 40 ist über die Tragarme 7 hinter den Bodenbearbeitungswerkzeugen 8 der als Kreiselegge 9 ausgebildeten Bodenbearbeitungsmaschine angeordnet. Die Bodenwalze 40 bestimmt die Eindringtiefe der Bodenbearbeitungswerkzeuge 8 der Kreiselegge 9 in den Boden, da sich die Kreiselegge 9 über die einstellbaren Anschläge über die Tragarme 7 auf der Bodenwalze 40 abstützt.

Die Bodenwalze 40 besteht aus den jeweils mit einem Abstand nebeneinander angeordneten luftbereiften Reifen 3. Bei der Bodenwalze 40 ist jeder Reifen 3 für sich separat mit dem Tragrahmen 41 der Bodenwalze 40 mittels der Halterungen 42 befestigt. Somit ist also jeder Reifen 3 auf einem eigenem Wellenabschnitt 43 gelagert. Hierdurch ergibt sich, daß die Welle, auf der die Reifen 3 drehbar gelagert sind, somit nach jedem Reifen unterbrochen ist. Der Freiraum zwischen den einander benachbarten Reifen 3 ist größer als 4 cm. Jede Halterung 42 ist jeweils an einem Wellenabschnitt 43 befestigt. Die Halterung 42 weist auf ihrer Oberseite jeweils die Flanschplatte 15 auf, über welche die Halterungen 42 und somit die Wellenabschnitte 43 mit den Reifen 3 mit den Schrauben 16 an den Tragrahmen 41 seitlich ein- und verstellbar angeordnet sind.

Hinter der Bodenwalze 40 sind in dem Bereich zwischen den Reifen die Striegelzinken 44 angeordnet. Die Striegelzinken 44 sind jeweils separat höhenverstellbar an der Halterung 42 der Reifen 3 angeordnet. Weiterhin sind zusätzlich zu den Striegelzinken 24 zwischen diesen jeweils ein weiterer Striegelzinken 45 in dem Bereich hinter einem Reifen 3 ebenfalls höhenverstellbar an einer an der Halterung 42 befestigten Halterung 46 angeordnet.

Des weiteren sind jeweils zwischen zwei einander benachbarten Reifen 3 ein in den Raum zwischen die Reifen 3 ragender Abstreifer 47 angeordnet. Dieser Abstreifer 47 kann ein separates Element sein, es ist jedoch auch möglich, die Halterung 46 so anzuordnen, daß sie als Abstreifer 47 wirkt. Der Abstreifer 47 ist auf der Rückseite der Walze 40 zwischen den Reifen angeordnet. Die Abstreifkante des Abstreifers 47 ist derart zwischen den Reifen angeordnet, daß sie zu der Radialen, die durch die Drehachse der Reifen 3 verläuft, derart geneigt ist, daß die Abstreifebene des Abstreifers 47 in Drehrichtung der Reifen zumindest etwas verdreht ist und so von der Radialen zumindest etwas abweichend verläuft. So kann der Abstreifer die evtl. sich zwischen den Reifen festsetzenden Kluten nach außen abstreifen und verhindert so, daß die Kluten nach innen in den Zwischenraum zwischen die Reifen 3 wandern.

Die Gerätekombination gemäß Fig. 5, in der die Bodenwalze 40 angeordnet ist, weist vor der Bodenwalze 40 die Kreiselegge 9 auf, die über ihre Dreipunktkupplungselemente 10 an den Dreipunktkraftheber des Schleppers 48 angeordnet ist. Auf der Vorderseite des Schleppers 48 ist in der Fronthydraulik der Bodenpacker 49 angeordnet. Auf dem Bodenpacker 49 ist der Dreipunkkupplungrahmen 50 angeordnet, mit dem der Bodenpacker 49 an die Fronthydraulik 51 des Schleppers 51 angeschlossen ist. An dem Dreipunktkupplungsrahmen 50 ist der Vorratsbehälter 52 der Sämaschine 53 angeordnet. Auf dem Tragrahmen 41 der Bodenwalze 40 ist das pneumatische Verteilorgan 54 der Sämaschine 53 angeordnet. Unter dem Vorratsbehälter 52 ist das Dosierorgan 55 angeordnet. Das durch das Dosierorgan 55 dosierte Saatgut wird durch den von dem Gebläse 56 erzeugten Luftstrom über den Schlauch 57 zu dem Verteilorgan 54 geblasen, von dem aus die einzelnen Leitungen 58 zu den hinter der Bodenwalze 40 angeordneten Säscharen 59 führen. Die Säschare 59 sind an dem Schwenkrahmen 60 in aufrechter Ebene angeordnet. Der Schwenkrahmen 60 ist mittels der Gelenke 61 an dem Tragrahmen 61 der Bodenwalze 40 angeordnet. Weiterhin ist an dem Tragrahmen 41 der aufrechte Tragarm 62 angeordnet. Zwischen dem Tragarm 62 und dem Schwenkrahmen 41 ist der Hydraulikzylinder 63 angeordnet, über den der Schwenkrahmen 60 mit den Säscharen 59 nach oben verschwenkt werden kann, so daß zum Wenden am Feldende und zum Transport der Gerätekombination die Säschare 9 weit vom Boden abgehoben werden können.

## Patentansprüche

1. Gerätekombination, bestehend aus einer Bodenbearbeitungsmaschine und einer hinter der Bodenbearbeitungsmaschine angeordneten Nachlaufwalze, die die Eindringtiefe der Bodenbearbeitungswerkzeuge der Bodenbearbeitungsmaschine in den Boden bestimmt und auf der sich das Gewicht der Bodenbearbeitungsmaschine während des Bodenbearbeitungsvorganges abstützt, wobei die Nachlaufwalze Reifen aufweist, dadurch gekennzeichnet, daß die Reifen beabstandet zueinander angeordnet sind und daß hinter der Nachlaufwalze (1,40) in dem Bereich zwischen den Reifen (3) jeweils ein Striegelzinken (18,44) angeordnet ist.

2. Gerätekombination nach Anspruch 1, dadurch gekennzeichnet, daß die Striegelzinken (18) an einem Querbalken (19) angeordnet sind, daß der Querbalken in der Höhe verstellbar ist.

3. Gerätekombination nach Anspruch 1, dadurch gekennzeichnet, daß jeder Striegelzinken (44) separat höhenverstellbar an der Halterung (42) des Reifens (3) bzw. an dem Tragrahmen (41) befestigt ist.

4. Gerätekombination nach Anspruch 1, dadurch gekennzeichnet, daß zusätzlich zu den Striegelzinken (44) zwischen diesen jeweils zumindest einer zweiten Striegelzinke (45) in den Bereich hinter dem jeweiligen Reifen (3) angeordnet ist.

## Claims

1. Combination machine, including a ground cultivating machine and a follower roller disposed behind the ground cultivating machine, which follower roller determines the depth to which the ground cultivating tools of the ground cultivating machine penetrate the ground, and which follower roller supports the weight of the ground cultivating machine during the ground cultivating operation, the follower roller having tyres, characterised in that the tyres are spaced from one another, and in that a raking comb tine (18, 44) is disposed behind each respective follower roller (1, 40) in the region between the tyres (3).

2. Combination machine according to claim 1, characterised in that the raking comb tines (18) are disposed on a cross-beam (19), and in that the cross-beam is vertically adjustable.

3. Combination machine according to claim 1, characterised in that each raking comb tine (44) is mounted separately in a vertically adjustable manner on the means (42) for supporting a tyre (3), or respectively on the supporting frame (41).

4. Combination machine according to claim 1, characterised in that, in addition to the raking comb tines (44), at least one second raking comb tine (45) is disposed between the latter in the region behind the respective tyre (3).

## Revendications

1. Machine combinée composée d'une machine pour le travail du sol et d'un rouleau-suiveur en aval de cette machine pour le travail du sol, rouleau qui définit la profondeur de pénétration dans le sol des outils de la machine pour le travail du sol et sur lequel s'appuie le poids de la machine pour le travail du sol pendant le travail, le rouleau-suiveur comportant des pneumatiques, machine caractérisée en ce que les pneumatiques sont écartés les uns des autres et en ce que derrière le rouleau-suiveur (1, 40), dans la zone comprise entre les pneumatiques (3), il y a chaque fois une dent de raclage (18, 44).

2. Machine combinée selon la revendication 1, caractérisée en ce que les dents de raclage (18) sont prévues sur une traverse (19) réglable en hauteur.

3. Machine combinée selon la revendication 1, caractérisée en ce que chaque dent de raclage (44) est réglable séparément en hauteur sur le support (42) du pneumatique (3) ou est fixée au châssis (41).

4. Machine combinée selon la revendication 1, caractérisée en ce qu'en plus des dents de raclage (44) prévues entre les pneumatiques, il y a entre ceux-ci au moins une seconde dent de raclage (45) dans la zone située derrière chaque pneumatique (3).

FIG.1

FIG.2

# FIG. 3

FIG.4

FIG.5

EP 0 365 050 B1